# EUROPÄISCHE PATENTSCHRIFT

(11) **EP 3 683 645 B1**
(45) Veröffentlichungstag und Bekanntmachung des Hinweises auf die Patenterteilung: **10.11.2021**
(21) Anmeldenummer: 20152128.3
(22) Anmeldetag: 16.01.2020
(51) Int. Cl.: G05D 1/02

(54) **SYSTEM MIT EINEM ERSTEN BODENBEARBEITUNGSGERÄT UND EINEM ZWEITEN BODENBEARBEITUNGSGERÄT SOWIE VERFAHREN ZUM BETRIEB EINES SOLCHEN SYSTEMS**
SYSTEM COMPRISING A FIRST GROUND PROCESSING DEVICE AND A SECOND GROUND PROCESSING DEVICE AND METHOD FOR OPERATING SUCH A SYSTEM
SYSTÈME DOTÉ D'UN PREMIER APPAREIL DE TRAITEMENT DU SOL ET D'UN SECOND APPAREIL DE TRAITEMENT DU SOL AINSI QUE PROCÉDÉ DE FONCTIONNEMENT D'UN TEL SYSTÈME

(30) Priorität: 18.01.2019 DE 102019101337
(43) Veröffentlichungstag der Anmeldung: 22.07.2020
(73) Patentinhaber: Vorwerk & Co. Interholding GmbH, 42275 Wuppertal (DE)
(72) Erfinder: Arnold, Hans-Peter, 58566 Kierspe (DE); Büning, Thomas, 44795 Bochum (DE); Fleczok, Benjamin, 45144 Essen (DE); Frielinghaus, Robert, 44803 Bochum (DE); Helmich, Martin, 47239 Duisburg (DE); Hillen, Lorenz, 42287 Wuppertal (DE); Holz, Christian, 44137 Dortmund (DE); Isenberg, Gerhard, 50668 Köln (DE); Mosebach, Andrej, 44809 Bochum (DE); Ortmann, Roman, 47057 Duisburg (DE); Schmitz, Kevin, 40599 Düsseldorf (DE); Vitz, Fabian, 42327 Wuppertal (DE); van Teeffelen, Niklas, 40223 Düsseldorf (DE); Kemker, Uwe, 42105 Wuppertal (DE); Hackert, Georg, 8832 Wilen bei Wollerau (CH)
(74) Vertreter: Müller, Enno

(56) Entgegenhaltungen:
- EP-A1- 3 416 019
- WO-A1-2017/197190
- DE-A1-102014 105 460

## Beschreibung

### Gebiet der Technik

Die Erfindung betrifft ein System mit einem ersten Bodenbearbeitungsgerät und einem zweiten Bodenbearbeitungsgerät, wobei das erste Bodenbearbeitungsgerät ein ausschließlich manuell von einem Nutzer innerhalb einer Umgebung geführtes Bodenbearbeitungsgerät ist und/oder wobei das zweite Bodenbearbeitungsgerät ein ausschließlich automatisch betriebenes Bodenbearbeitungsgerät ist, und wobei das zweite Bodenbearbeitungsgerät ausgebildet ist, sich anhand einer Umgebungskarte innerhalb einer Umgebung zu orientieren und zu lokalisieren.

Des Weiteren betrifft die Erfindung ein Verfahren zum Betrieb eines derartigen Systems, wobei das erste Bodenbearbeitungsgerät ein ausschließlich manuell von einem Nutzer innerhalb einer Umgebung geführtes Bodenbearbeitungsgerät ist und/oder wobei das zweite Bodenbearbeitungsgerät ein ausschließlich automatisch betriebenes Bodenbearbeitungsgerät ist, und wobei sich das zweite Bodenbearbeitungsgerät anhand einer Umgebungskarte innerhalb einer Umgebung orientiert und lokalisiert.

### Stand der Technik

Bodenbearbeitungsgeräte sind im Stand der Technik als manuell von einem Nutzer geführte oder sich selbsttätig fortbewegende Geräte bekannt. Des Weiteren ist es auch bekannt, innerhalb beispielsweise eines Haushalts ein System aus mehreren Bodenbearbeitungsgeräten zu betreiben und die Vorteile der manuell geführten Bodenbearbeitung und der automatisch betriebenen Bodenbearbeitung ergänzend zu nutzen.

Bodenbearbeitungsgeräte im Sinne der Erfindung können beispielsweise Reinigungsgeräte wie Staubsauger und/oder Feuchtwischgeräte, Poliergeräte, Bohnergeräte, Schleifgeräte, Rasenmähgeräte oder ähnliche sein. Manuell von einem Nutzer geführte Bodenbearbeitungsgeräte zeichnen sich dabei üblicherweise durch einen Stiel und/oder Griff aus, an welchem der Nutzer das Bodenbearbeitungsgerät über eine zu bearbeitende Fläche, beispielsweise Bodenfläche oder Überbodenfläche, führen kann. Die automatisch betriebenen Bodenbearbeitungsgeräte zeichnen sich durch eine Navigationseinrichtung zur selbsttätigen Orientierung und Lokalisierung innerhalb einer Umgebung, vorzugsweise anhand einer Umgebungskarte, aus, wobei das automatische Bodenbearbeitungsgerät selbsttätig innerhalb der Umgebung verfahren kann, anhand der Umgebungskarte navigiert und dabei ggf. Bodenbearbeitungstätigkeiten ausführt.

Die Patentschrift EP 2 294 960 B1 offenbart beispielsweise einen Reinigungsroboter, welcher eingerichtet ist, Räumlichkeiten kartenmäßig zu erfassen und auf dem Boden eines oder mehrerer Räume zu verfahren, wobei der Reinigungsroboter über Sensormittel verfügt, um Positionen von Hindernissen innerhalb eines erfassten Raumes zu bestimmen. Eine Umgebungskarte bzw. Umgebungsdaten können dabei während einer Erkundungsfahrt aufgenommen werden. Die Erkundungsfahrt wird entweder selbst von dem Bodenbearbeitungsgerät gesteuert oder manuell im Rahmen eines sog. Teach-Ins durch einen Nutzer, wobei der Nutzer das Reinigungsgerät manuell, beispielsweise mittels einer Fernsteuerung, durch die Umgebung steuert. Dabei ist es ebenfalls bekannt, beispielsweise durch anleitendes Abfahren der Umgebung, Flächengrenzen einzugeben und/oder sog. No-Go-Areas zu definieren, innerhalb welcher der Reinigungsroboter nicht fahren darf.

Aus der Veröffentlichungsschrift WO 2015/178855 A1 ist es des Weiteren bekannt, ein manuell geführtes Bodenbearbeitungsgerät mit einer Einrichtung auszustatten, die einen Lernmodus und einen Automatikmodus ausführen kann, wobei die Einrichtung während des Lernmodus Bewegungen und Tätigkeiten des manuell geführten Bodenbearbeitungsgerätes aufzeichnet und während des Automatikmodus dasselbe oder ein anderes Bodenbearbeitungsgerät so steuert, dass die zuvor aufgezeichneten Bewegungen und Tätigkeiten erneut von dem jeweiligen Bodenbearbeitungsgerät ausgeführt werden.

Des Weiteren offenbart die Offenlegungsschrift DE 10 2014 105 460 A1 ein selbstfahrendes Bodenreinigungsgerät mit einem einem Führungsfahrzeug folgenden Folgewerkzeug. Das Folgewerkzeug ist derart an das erste Reinigungsfahrzeug gekoppelt, dass das Folgewerkzeug dem ersten Reinigungsfahrzeug auf dessen Bearbeitungsweg folgt. Das Folgewerkzeug kann auch nur über eine Datenübertragungsstrecke mit dem ersten Reinigungsfahrzeug in Wirkverbindung stehen.

### Zusammenfassung der Erfindung

Ausgehend von dem vorgenannten Stand der Technik ist es Aufgabe der Erfindung, ein vorgenanntes System mit einem ersten Bodenbearbeitungsgerät und einem zweiten Bodenbearbeitungsgerät so weiterzubilden, dass diese sich vorteilhaft ergänzen und einen Mehrwert für den Nutzer schaffen.

Zur Lösung dieser Aufgabe wird zunächst vorgeschlagen, dass das zweite Bodenbearbeitungsgerät ausgebildet ist, die Umgebungskarte an das erste Bodenbearbeitungsgerät zu übermitteln, wobei das erste Bodenbearbeitungsgerät eingerichtet ist, sich unter Zuhilfenahme eigener Sensoren in der Umgebungskarte zu lokalisieren, während einer Fortbewegung einen Fortbewegungspfad des ersten Bodenbearbeitungsgerätes zu detektieren und mit Bezug zu der Umgebungskarte eine Information über den detektierten Fortbewegungspfad an das zweite Bodenbearbeitungsgerät zu übermitteln, wobei das zweite Bodenbearbeitungsgerät eine Steuer- und Auswerteeinrichtung aufweist, die eingerichtet ist, die empfangene Information zu analysieren und auf der Basis des von dem ersten Bodenbearbeitungsgerät detektierten Fortbewegungspfades und/oder eines nicht von dem Fortbewegungspfad überfahrenen Teilbereiches der Umgebung eine No-Go-Area in die Umgebungskarte einzutragen, welche das zweite Bodenbearbeitungsgerät nicht befahren darf.

Erfindungsgemäß arbeiten das erste Bodenbearbeitungsgerät und das zweite Bodenbearbeitungsgerät des Systems nun so zusammen, dass die Steuer- und Auswerteeinrichtung des zweiten Bodenbearbeitungsgerätes die von dem ersten Bodenbearbeitungsgerät gesammelten Informationen über den Fortbewegungspfad nutzt, um innerhalb seiner Umgebungskarte sog. No-Go-Areas zu definieren, welche von dem zweiten Bodenbearbeitungsgerät nicht befahren werden sollen. Der Begriff No-Go-Area bezeichnet einen für die Fortbewegung des zweiten Bodenbearbeitungsgerätes gesperrten Teilbereich der Umgebung, in welchen das zweite Bodenbearbeitungsgerät nicht eintreten darf. Eine No-Go-Area ist üblicherweise durch virtuelle Bereichsgrenzen definiert, die das Bodenbearbeitungsgerät nicht überqueren darf. In der Umgebungskarte werden die Bereichsgrenzen vorzugsweise als Linien dargestellt bzw. hinterlegt. Das erste Bodenbearbeitungsgerät weist eine Recheneinrichtung auf, welche eingerichtet ist, eine Mitteilung über den zurückgelegten Fortbewegungspfad des ersten Bodenbearbeitungsgerätes bzw. außerhalb des Fortbewegungspfades liegende, nicht befahrene Teilbereiche der Umgebung zu erstellen, die entsprechende Informationen für das zweite Bodenbearbeitungsgerät enthält. Der Fortbewegungspfad wird vorzugsweise während einer Bodenbearbeitungstätigkeit von einer Detektionseinrichtung des ersten Bodenbearbeitungsgerätes aufgezeichnet, beispielsweise von einer Kamera, einem Laserscanner und/oder einem Inertialsensor, wobei die Auswertung der gesammelten Informationen entweder bereits zumindest zum Teil innerhalb des ersten Bodenbearbeitungsgerätes erfolgen kann, oder anschließend innerhalb des zweiten Bodenbearbeitungsgerätes, welches die Informationen über den detektierten Fortbewegungspfad von dem ersten Bodenbearbeitungsgerät erhält. Die Steuer- und Auswerteeinrichtung des zweiten Bodenbearbeitungsgerätes kann die empfangene Information vollautomatisch verarbeiten, so dass der Nutzer keine zusätzlichen Arbeitsschritte unternehmen muss, um eine oder mehrere No-Go-Areas in die Umgebungskarte des zweiten Bodenbearbeitungsgerätes einzutragen. Vielmehr erfolgt die Analyse und Erstellung, Bearbeitung und/oder Erweiterung der Umgebungskarte vollautomatisch durch das zweite Bodenbearbeitungsgerät.

Vorzugsweise weisen das erste Bodenbearbeitungsgerät und das zweite Bodenbearbeitungsgerät korrespondierende Kommunikationsmodule für eine drahtlose Kommunikation der Information über den Fortbewegungspfad und/oder die Bodenbearbeitungstätigkeit auf. Insbesondere können die Bodenbearbeitungsgeräte über korrespondierende WLAN-Module, Bluetooth-Module oder andere Funkmodule verfügen, welche geeignet sind, die Information über den Fortbewegungspfad und/oder die Bodenbearbeitungstätigkeit zu übermitteln. Es ist somit nicht erforderlich, dass Teilbereiche des ersten bzw. des zweiten Bodenbearbeitungsgerätes physisch miteinander verbunden werden oder gar ein die Information enthaltender Speicher von dem ersten Bodenbearbeitungsgerät an das zweite Bodenbearbeitungsgerät übertragen wird. Vielmehr reicht es, dass zumindest die Information über den Fortbewegungspfad, d.h. zumindest die Sensorsignale einer entsprechenden Detektionseinrichtung des ersten Bodenbearbeitungsgerätes, an das zweite Bodenbearbeitungsgerät übermittelt werden. Dies kann beispielsweise im Sinne einer von dem ersten Bodenbearbeitungsgerät ausgesendeten Nachricht erfolgen oder auch durch Zugreifen des zweiten Bodenbearbeitungsgerätes auf in dem ersten Bodenbearbeitungsgerät gespeicherte Informationen über den Fortbewegungspfad bzw. die Bodenbearbeitungstätigkeit.

Erfindungsgemäß ist das erste Bodenbearbeitungsgerät ein ausschließlich manuell von einem Nutzer innerhalb einer Umgebung geführtes Bodenbearbeitungsgerät und/oder ist das zweite Bodenbearbeitungsgerät ein ausschließlich automatisch betriebenes Bodenbearbeitungsgerät. Das erste Bodenbearbeitungsgerät kann somit ein manuell geführtes Bodenbearbeitungsgerät sein, welches sich üblicherweise durch einen Stiel und/oder Griff auszeichnet, an welchem ein Nutzer anfassen und das Bodenbearbeitungsgerät über eine zu bearbeitende Fläche schieben kann. Das manuell geführte Gerät kann beispielsweise ein Reinigungsgerät, wie ein Handstaubsauger, ein Handwischgerät, ein Poliergerät, Bohnergerät, Rasenmähgerät oder Ähnliches sein. Das ausschließlich manuell geführte Bodenbearbeitungsgerät verfügt üblicherweise nicht selbst über eine Navigationseinrichtung zur Orientierung und Lokalisierung des Bodenbearbeitungsgerätes innerhalb der Umgebung. Vielmehr wird dieses ausschließlich von dem Nutzer durch die Umgebung, beispielsweise Räume einer Wohnung, geführt und vollzieht dort entlang des von dem Nutzer gewählten Fortbewegungspfades seine Bodenbearbeitungstätigkeiten wie Saugen, Wischen, Polieren, Bohnern, Schleifen, Mähen oder Ähnliches. Das zweite Bodenbearbeitungsgerät kann vorteilhaft ein ausschließlich automatisch betriebenes Bodenbearbeitungsgerät, nämlich ein Bodenbearbeitungsroboter, der sich selbsttätig innerhalb der Umgebung fortbewegt sein. Solche autonomen Bodenbearbeitungsgeräte sind beispielsweise als Saugroboter, Wischroboter, Mähroboter oder Ähnliches bekannt. Ein solches sich selbsttätig fortbewegendes Bodenbearbeitungsgerät verfügt üblicherweise über eine Navigationseinrichtung, mit welcher sich das zweite Bodenbearbeitungsgerät in der Umgebung orientieren und lokalisieren kann. Das Navigationssystem beinhaltet beispielsweise einen Abstandssensor wie einen 3D-Laserscanner oder Ähnliches, mit welchem Abstände zu Hindernissen in der Umgebung gemessen werden. Anhand der gemessenen Abstände kann das automatisch betriebene Bodenbearbeitungsgerät eine Umgebungskarte erstellen, welche einen Grundriss der Umgebung, beispielsweise einen Grundriss einer Wohnung oder zumindest eines oder mehrerer Räume, beinhaltet, sowie Begrenzungen von Objekten, beispielsweise Möbelstücken, Dekorationsobjekten und Ähnlichem. Die Umgebungskarte kann beispielsweise mittels eines sog. SLAM-Algorithmus (Simultaneous Localization And Measurement-Algorithmus) erstellt werden. Durch die Kombination eines ausschließlich manuell von einem Nutzer führbaren Bodenbearbeitungsgerätes mit einem ausschließlich automatisch betreibbaren Bodenbearbeitungsgerät können Erkenntnisse, Informationen und Intentionen des Nutzers, welche dieser bei dem manuellen Führen des ersten Bodenbearbeitungsgerätes anwendet, auch für den Betrieb des zweiten, automatisch betriebenen Bodenbearbeitungsgerätes genutzt werden. Ein mit dem manuell geführten Bodenbearbeitungsgerät ausgeführter Bodenbearbeitungsvorgang kann hinsichtlich des Bewegungsablaufs aufgezeichnet werden und an das autonome Bodenbearbeitungsgerät übermittelt werden, welches dann wiederum anhand der empfangenen Daten eine oder mehrere No-Go-Areas einrichtet, die das autonome Bodenbearbeitungsgerät ansonsten gegebenenfalls befahren und bearbeiten würde. Es wird somit die Kenntnis genutzt, dass der Nutzer, aus welchem Grund auch immer, gewisse Teilbereiche der Umgebung nicht reinigt. Die Steuer- und Auswerteeinrichtung des zweiten Bodenbearbeitungsgerätes schließt daraus, dass diese Teilbereiche auch für das zweite Bodenbearbeitungsgerät zum Befahren und Bearbeiten verboten sind. Das zweite Bodenbearbeitungsgerät zeigt somit eine automatisch veranlasste Reaktion auf eine Benutzerintention, die dieser durch manuelle Benutzung des ersten Bodenbearbeitungsgerätes zum Ausdruck bringt. In umgekehrte Richtung, d.h. von dem zweiten Bodenbearbeitungsgerät an das erste Bodenbearbeitungsgerät, vorzugsweise von einem automatisch betriebenen Bodenbearbeitungsgerät an ein manuell geführtes Bodenbearbeitungsgerät, können ebenfalls Informationen übertragen werden. Beispielsweise kann eine von dem automatisch betriebenen Bodenbearbeitungsgerät erstellte Umgebungskarte an das manuell geführte Bodenbearbeitungsgerät übertragen werden, so dass sich dieses unter Zuhilfenahme eigener Sensoren darin lokalisieren kann. Hierbei kann das manuell geführte Bodenbearbeitungsgerät beispielsweise Sensoren nutzen, die zwar eine grobe Lokalisation innerhalb der Umgebungskarte, jedoch keine eigene Kartenerstellung ermöglichen. Das Zusammenwirken des manuell geführten Bodenbearbeitungsgerätes und des automatisch betriebenen Bodenbearbeitungsgerätes befähigt dann auf synergetische Art und Weise ein manuell geführtes Bodenbearbeitungsgerät zur Selbstlokalisierung. Das manuell geführte Bodenbearbeitungsgerät kann die Umgebungskarte des zweiten Bodenbearbeitungsgerätes des Weiteren vorteilhaft aktualisieren, ergänzen und/oder ändern. Denkbar ist hierbei eine Ergänzung dreidimensionaler Rauminformationen, beispielsweise Überbodenflächen betreffend, welche nur das manuell geführte, jedoch nicht das automatisch betriebene Bodenbearbeitungsgerät erreichen kann. Des Weiteren kann das manuell geführte Bodenbearbeitungsgerät auch eine Informationsergänzung der Umgebungskarte in Bezug auf weitere, für das automatisch betriebene Bodenbearbeitungsgerät nicht zugängliche Teilbereiche der Umgebung vornehmen. Hierbei kann es sich beispielsweise um Teilbereiche der Umgebung handeln, in welchen verlagerbare und/oder zumindest durch einen Nutzer entfernbare Objekte auf der Fläche ruhen oder Hindernisse einen Abstand zueinander aufweisen, die nicht mit dem automatisch betriebenen Bodenbearbeitungsgerät, jedoch durch das manuell geführte Bodenbearbeitungsgerät, zu erreichen sind.

Des Weiteren wird vorgeschlagen, dass die Steuer- und Auswerteeinrichtung des zweiten Bodenbearbeitungsgerätes eingerichtet ist, eine Fortbewegung des zweiten Bodenbearbeitungsgerätes unter Meidung der No-Go-Area zu steuern. Das zweite Bodenbearbeitungsgerät verfährt bzw. arbeitet nicht zwangsläufig identisch zu dem ersten Bodenbearbeitungsgerät, sondern kann einen Fortbewegungspfad nutzen, welcher sich von dem Fortbewegungspfad des ersten Bodenbearbeitungsgerätes unterscheidet. Durch das Definieren der No-Go-Areas anhand des Fortbewegungspfades des ersten Bodenbearbeitungsgerätes werden zwar Teilbereiche der Umgebung ausgespart, welche das erste Bodenbearbeitungsgerät nicht befahren hat, jedoch können die übrigen Teilbereiche, welche von dem ersten Bodenbearbeitungsgerät durchquert wurden, in unterschiedlicher Reihenfolge, abweichendem Verlauf des Fortbewegungspfades oder mit anderen Parametern durchquert bzw. bearbeitet werden. Somit kann das zweite Bodenbearbeitungsgerät eine Fortbewegungsstrategie nutzen, die sich von der manuell geführten Fortbewegungsrichtung und Reihenfolge des Nutzers unterscheidet. Insbesondere kann die Steuer- und Auswerteeinrichtung des zweiten Bodenbearbeitungsgerätes beispielsweise einen Fortbewegungspfad kalkulieren, welcher besonders selten überfahrene Teilbereiche der Umgebung beinhaltet. Somit kann ggf. eine kürzere Bodenbearbeitungszeit und/oder ein für die Bodenbearbeitung benötigter Energieaufwand auch durch das zweite Bodenbearbeitungsgerät reduziert werden.

Es kann des Weiteren vorgesehen sein, dass die Steuer- und Auswerteeinrichtung des zweiten Bodenbearbeitungsgerätes eingerichtet ist, die Fortbewegungspfade mehrerer zeitlich vorausgehender Fortbewegungen des ersten Bodenbearbeitungsgerätes dahingehend zu analysieren, dass ein Teilbereich der Umgebung identifiziert wird, welcher selten von dem ersten Bodenbearbeitungsgerät überfahren wird, wobei die Häufigkeit des Überfahrens des Teilbereiches mit einem definierten Häufigkeitsschwellwert verglichen wird, und wobei der Teilbereich bei Unterschreiten des Häufigkeitsschwellwertes als No-Go-Area definiert wird. Die Steuer- und Auswerteeinrichtung des zweiten Bodenbearbeitungsgerätes erkennt somit anhand der Verläufe einer Mehrzahl von Fortbewegungspfaden vergangener Bodenbearbeitungstätigkeiten, welche Teilbereiche der Umgebung der Nutzer selten mit dem manuellen Bodenbearbeitungsgerät befahren hat. Infolge dessen lässt das zweite Bodenbearbeitungsgerät diejenigen Teilbereiche der Umgebung aus, die der Nutzer in der Vergangenheit selten mittels des ersten Bodenbearbeitungsgerätes bearbeitet hat. Das zweite Bodenbearbeitungsgerät ist vorzugsweise ein autonom arbeitendes Bodenbearbeitungsgerät, kann jedoch auch ein manuell geführtes Bodenbearbeitungsgerät sein, welches dann das Ergebnis einer entsprechenden Analyse einem Nutzer beispielsweise auf einem Display anzeigt. Auf dem Display können Teilbereiche dargestellt sein, welche als No-Go-Areas definiert sind und/oder eine Information über eine vorausgehende Häufigkeit des Überfahrens eines betreffenden Teilbereiches in vorausgehenden Bodenbearbeitungen enthalten.

Des Weiteren wird vorgeschlagen, dass das erste Bodenbearbeitungsgerät des Weiteren eingerichtet ist, eine Bodenbearbeitungsinformation an das zweite Bodenbearbeitungsgerät zu übermitteln, wobei die Steuer- und Auswerteeinrichtung des zweiten Bodenbearbeitungsgerätes eingerichtet ist, die Bodenbearbeitungsinformation und den zugehörigen Fortbewegungspfad mindestens einer zeitlich vorausgehenden Bodenbearbeitung des ersten Bodenbearbeitungsgerätes dahingehend zu analysieren, dass ein Teilbereich der Umgebung identifiziert wird, welcher mit einem Geräteparameter, einem Bodenbearbeitungsparameter und/oder einem Gerätezubehör bearbeitet wurde, die von definierten Standardparametern für das erste und/oder zweite Bodenbearbeitungsgerät abweichen, und wobei der Teilbereich bei Abweichen von den Standardparametern als No-Go-Area definiert wird. Beispielsweise kann die Steuer- und Auswerteeinrichtung feststellen, dass der Nutzer mit einer besonderen Häufigkeit oder Geschwindigkeit oder einem bestimmten Bewegungsmuster über einen Teilbereich der Umgebung fährt. Alternativ und/oder zusätzlich ist es möglich, dass das erste Bodenbearbeitungsgerät neben dem Fortbewegungspfad auch Informationen über ein verwendetes Zubehör, eine Geräteeinstellung während der Bodenbearbeitung oder bestimmte Verfahrensparameter während der Bodenbearbeitung an das zweite Bodenbearbeitungsgerät übermittelt. Das zweite Bodenbearbeitungsgerät kann diese dann auswerten, um festzustellen, ob die mitgeteilten Parameter von definierten Standardparametern des ersten und/oder zweiten Bodenbearbeitungsgerätes abweichen, insbesondere Parameter darstellen, welche das zweite Bodenbearbeitungsgerät nicht anwenden bzw. bereitstellen kann. In diesem Fall wird der betreffende Teilbereich für ein Befahren durch das zweite Bodenbearbeitungsgerät gesperrt, so dass dieser Teilbereich nur mit dem ersten Bodenbearbeitungsgerät zugänglich ist, beispielsweise mittels eines von dem Nutzer manuell geführten Bodenbearbeitungsgerätes, welches eine dort gewünschte Spezialbearbeitung ermöglicht, beispielsweise eine Bodenreinigung mit besonderen Einstellungen wie eine extrem niedrige Saugleistungsstufe, eine besonders niedrige Fortbewegungsgeschwindigkeit oder mittels eines besonderen Vorsatzgerätes erbringen kann.

Es kann des Weiteren vorgesehen sein, dass die Steuer- und Auswerteeinrichtung des zweiten Bodenbearbeitungsgerätes eingerichtet ist, die Fortbewegungspfade, sowie insbesondere zusätzlich eine Bodenbearbeitungsinformation mehrerer zeitlich vorausgehender Fortbewegungen des ersten Bodenbearbeitungsgerätes dahingehend zu analysieren, dass ein Teilbereich der Umgebung identifiziert wird, welcher ein von dem ersten Bodenbearbeitungsgerät verschobenes und/oder überwundenes Hindernis aufweist, wobei eine Häufigkeit der Detektion eines solchen Hindernisses in einem bestimmten Teilbereich mit einem definierten Häufigkeitsschwellwert verglichen wird, und wobei der Teilbereich bei Überschreiten des Häufigkeitsschwellwertes als No-Go-Area definiert wird. Gemäß dieser Ausgestaltung enthält die Information des ersten Bodenbearbeitungsgerätes an das zweite Bodenbearbeitungsgerät nicht nur den von dem ersten Bodenbearbeitungsgerät durchschrittenen Fortbewegungspfad, sondern vielmehr auch beispielsweise Informationen über Störgegenstände, die sich auf dem Fortbewegungspfad befanden. Derartige Störgegenstände können beispielsweise verschiebliche Hindernisse wie beispielsweise Kabel, leichtere Deko-Gegenstände oder Ähnliches sein und/oder Hindernisse, die von dem ersten Bodenbearbeitungsgerät überwunden werden konnten, wie beispielsweise ebenfalls Kabel, jedoch auch Teppichkanten, Türschwellen oder Ähnliches. Da das zweite, insbesondere automatisch betriebene Bodenbearbeitungsgerät derartige von dem ersten Bodenbearbeitungsgerät verschobene und/oder überwundene Hindernisse ggf. nicht selbst verschieben bzw. überwinden kann, werden Teilbereiche der Umgebung, welche in der Vergangenheit häufig einen solchen Störgegenstand beinhalteten, als No-Go-Area definiert, so dass dieser Teilbereich der Umgebung für Fahrten des zweiten Bodenbearbeitungsgerätes gesperrt wird bzw. von diesem gemieden wird.

Gemäß einer besonderen Ausführungsform wird vorgeschlagen, dass das erste Bodenbearbeitungsgerät ein von einem Nutzer betätigbares Betätigungselement aufweist, mit welchem der Nutzer während einer Fortbewegung des ersten Bodenbearbeitungsgerätes Positionen des Fortbewegungspfades markieren kann, wobei die Steuer- und Auswerteeinrichtung des zweiten Bodenbearbeitungsgerätes eingerichtet ist, den Fortbewegungspfad mindestens einer zeitlich vorausgehenden Fortbewegung des ersten Bodenbearbeitungsgerätes dahingehend zu analysieren, dass ein Teilbereich der Umgebung identifiziert wird, in Bezug auf welchen ein Nutzer des ersten Bodenbearbeitungsgerätes zuvor eine Markierung vorgenommen hat, wobei der markierte Teilbereich als No-Go-Area definiert wird. Gemäß dieser Ausgestaltung weist das erste Bodenbearbeitungsgerät, welches insbesondere ein ausschließlich manuell geführtes Bodenbearbeitungsgerät ist, ein Betätigungselement auf, welches der Nutzer betätigen kann, um bestimmte Positionen oder Abschnitte des Fortbewegungspfades, welche bestimmten Teilbereichen der Umgebung zugeordnet sind, als durch das zweite Bodenbearbeitungsgerät nicht befahrbar zu markieren. Die markierten Teilbereiche sind somit als No-Go-Areas definiert, in welche das zweite Bodenbearbeitungsgerät nicht hineinfahren darf. Zusätzlich kann der Nutzer, beispielsweise manuell über eine Eingabeeinrichtung des ersten Bodenbearbeitungsgerätes oder über ein externes Endgerät, welches vorzugsweise in drahtloser Kommunikation mit dem ersten Bodenbearbeitungsgerät steht, insbesondere mittels eines Mobiltelefons, Laptops, Tablet-Computers oder Ähnlichem, eine Information über den Grund der Markierung übermitteln, beispielsweise dass für die Bearbeitung des markierten Teilbereiches ein bestimmtes Zubehör, eine bestimmte Geräteeinstellung oder Ähnliches des Bodenbearbeitungsgerätes erforderlich ist. Diese Information kann dann zusätzlich beispielsweise in eine Umgebungskarte des zweiten Bodenbearbeitungsgerätes aufgenommen werden. Die mittels des Betätigungselements durchgeführte Markierung des Teilbereiches bzw. der Position des Fortbewegungspfades kann vorteilhaft mit automatisch von der Steuer- und Auswerteeinrichtung des zweiten Bodenbearbeitungsgerätes erkannten No-Go-Areas abgeglichen werden, um die Richtigkeit der automatisch erstellten No-Go-Areas zu verifizieren. Das zweite Bodenbearbeitungsgerät erkennt somit Teilbereiche, die von dem ersten Bodenbearbeitungsgerät nicht befahren wurden und gleicht diese mit manuell durch den Nutzer übermittelten Informationen über nicht zu befahrende Teilbereiche der Umgebung ab, so dass die Umgebungskarte des zweiten Bodenbearbeitungsgerätes vorzugsweise nur solche Teilbereiche als befahrbar kennzeichnet, die sich außerhalb der No-Go-Areas befinden.

Des Weiteren kann vorgesehen sein, dass die Steuer- und Auswerteeinrichtung des zweiten Bodenbearbeitungsgerätes eingerichtet ist, vor Definition eines Teilbereiches der Umgebung als No-Go-Area eine Bestätigung durch den Nutzer des zweiten Bodenbearbeitungsgerätes anzufordern. In allen vorgenannten Fällen kann somit noch zusätzlich eine Bestätigung durch den Nutzer erfolgen, dass ein bestimmter Teilbereich als No-Go-Area definiert werden soll. Dies kann beispielsweise eine Rückfrage an den Nutzer und eine Freigabe durch den Nutzer in einer Applikation beinhalten, die auf einem Bodenbearbeitungsgerät oder auch auf einem externen Endgerät, wie beispielsweise einem Mobiltelefon, einem Tablet-Computer oder einem ähnlichen Gerät installiert ist.

Des Weiteren wird vorgeschlagen, dass das erste Bodenbearbeitungsgerät zumindest eine Detektionseinrichtung aus der folgenden Gruppe aufweist: Kamera, Laserscanner, Bodensensor zur Detektion einer Art einer zu bearbeitenden Fläche, Schmutzsensor zur Detektion einer Art oder eines Grades einer Verschmutzung der zu bearbeitenden Fläche, Sensor zum Ermitteln einer Leistung eines Antriebsmotors, Abstandssensor, Inertialsensor, Zeitsensor, Kontaktsensor. Eine oder mehrere dieser vorgenannten Einrichtungen sind ausgebildet, Detektionssignale aufzunehmen, die zu einer Information für das zweite Bodenbearbeitungsgerät verarbeitet werden können. In diesem Sinne kann das erste Bodenbearbeitungsgerät und/oder das zweite Bodenbearbeitungsgerät eine Auswerteeinrichtung aufweisen, die eingerichtet ist, aus den Detektionssignalen der Detektionseinrichtung mindestens eine der folgenden Informationen zu ermitteln: Einen Fortbewegungspfad des ersten Bodenbearbeitungsgerätes in der Umgebung, eine Umgebungskarte, einen Bearbeitungsstatus eines Teilbereiches der Umgebung, eine Position eines bearbeiteten, nicht bearbeiteten und/oder für das erste Bodenbearbeitungsgerät nicht befahrbaren Teilbereiches, eine Bodenart, eine Verschmutzungsart, einen Verschmutzungsgrad, ein von dem ersten Bodenbearbeitungsgerät zur Bodenbearbeitung verwendetes Zubehör, eine 3D-Umgebungsinformation und/oder eine Hindernisinformation. Die Kamera und/ oder der Laserscanner dienen beispielsweise der Bestimmung der Position des ersten Bodenbearbeitungsgerätes innerhalb der Umgebung sowie der Bestimmung der Position von Hindernissen. Hierzu kann typischerweise ein sog. SLAM-Algorithmus (Simultaneous Localization And Measurement) verwendet werden. Durch die Sensordaten der Kamera bzw. des Laserscanners kann ein Fortbewegungspfad des manuell geführten Bodenbearbeitungsgerätes in der Umgebung detektiert werden. Des Weiteren kann anhand der Sensordaten eine Umgebungskarte für das manuell geführte und/oder das automatisch betriebene zweite Bodenbearbeitungsgerät erstellt werden, welche bearbeitete, nicht bearbeitete, d.h. bei der Bodenbearbeitungstätigkeit ausgelassene und/oder nicht zugängliche Teilbereiche der Umgebung ausweist, ggf. inklusive einer Information über die Zahl an Wiederholungen, welche das manuell geführte Bodenbearbeitungsgerät ausgeführt oder versucht hat, um die Bodenbearbeitungstätigkeit zu vollenden. Das manuell geführte Bodenbearbeitungsgerät kann des Weiteren einen Bodensensor zur Erkennung eines Bodentyps aufweisen. Ein solcher Bodensensor kann beispielsweise eine Kamera beinhalten oder einen Sensor zum Ermitteln einer Leistung eines Antriebsmotors. Beispielsweise kann detektiert werden, welche Stromaufnahme ein Motor aufweist, der zum Antrieb eines Gebläsemotors, eines Antriebsrades einer rotierenden Reinigungswalze, eines schwingenden Wischelementes oder ähnlichem dient. Beispielsweise benötigt eine rotierende Borstenwalze des manuell geführten Bodenbearbeitungsgerätes auf einem Teppichboden oder einem Teppich eine höhere Stromaufnahme des antreibenden Motors als beispielsweise ein Hartboden wie Fliesen oder Holzdielen. Auf diese Art und Weise kann dann auf die Art eines Bodens geschlossen werden. Ein Schmutzsensor des Bodenbearbeitungsgerätes zur Detektion der Art und/oder des Grades einer Verschmutzung der zu bearbeitenden Fläche kann beispielsweise ebenfalls eine Kamera beinhalten. Sofern das manuell geführte Bodenbearbeitungsgerät mit Abstandsensoren, wie beispielsweise InfrarotSensoren und/oder Ultraschallsensoren, ausgestattet ist, dienen diese zum Erfassen des Abstandes zu innerhalb der Umgebung vorhandenen Hindernissen. Dadurch kann einerseits verhindert werden, dass das erste Bodenbearbeitungsgerät bzw. dann später auch das zweite Bodenbearbeitungsgerät an eine Raumbegrenzung und/oder ein Objekt innerhalb der Umgebung anstößt. Das Gerät kann vorzugsweise einen bestimmten Sicherheitsabstand zu dem Hindernis einhalten oder besonders langsam an dieses heranfahren. Andererseits kann die Information über ein Hindernis auch genutzt werden, um bewegliche Störgegenstände oder Störobjekte wie Kabel, Socken, Vasen, Blumen, Kinderspielzeug oder Ähnliches innerhalb der Umgebung zu erkennen und beispielsweise einen Nutzer aufzufordern, diese von dem zu bearbeitenden Teilbereich der Umgebung zu entfernen. Gegebenenfalls kann ergänzend eine Kamera verwendet werden, um eine Objekterkennung mittels digitaler Bildverarbeitung durchzuführen. Das manuell geführte Bodenbearbeitungsgerät kann des Weiteren eine Einrichtung zum Erkennen eines bestimmten mit dem Bodenbearbeitungsgerät verbundenen Zubehörs, insbesondere Vorsatzgerätes, aufweisen. Ein solches Zubehör kann beispielsweise ein bestimmtes Bodenbearbeitungselement oder ein abnehmbares Vorsatzgerät sein. Ein Bodenbearbeitungselement ist beispielsweise ein Reinigungselement wie eine Borstenwalze, ein Wischelement oder Ähnliches. Das Zubehör kann einen Code aufweisen, der das Zubehör eindeutig identifiziert, wobei das manuell geführte Bodenbearbeitungsgerät entsprechend eine Detektionseinrichtung aufweist, die eingerichtet ist, diesen Code zu erkennen und dementsprechend das detektierte Zubehör von anderem Zubehör zu unterscheiden. Somit kann die Information, welche von dem manuell geführten Bodenbearbeitungsgerät an das sich automatisch fortbewegende Bodenbearbeitungsgerät übermittelt wird, auch eine Angabe darüber enthalten, welches Zubehör für die Bodenbearbeitungstätigkeit genutzt wurde, so dass das automatisch betriebene Bodenbearbeitungsgerät des Weiteren auch mit einem entsprechenden Zubehör arbeitet bzw. ausgestattet werden kann. Besonders vorteilhaft kann hierbei auch berücksichtigt werden, ob das Bodenbearbeitungsgerät zur Bearbeitung von Hartbodenflächen oder Teppichböden bzw. Teppichen ausgestattet ist. Sofern das manuell geführte Bodenbearbeitungsgerät des Weiteren beispielsweise einen Inertialsensor aufweist, kann unter anderem auch ein dreidimensionaler Fortbewegungspfad dieses Bodenbearbeitungsgerätes innerhalb der Umgebung verfolgt werden. Ein Inertialsensor kann beispielsweise ein Gyroskop sein. Dadurch können 3D-Informationen gewonnen werden, die beispielsweise bearbeitete Stockwerke eines Gebäudes, Stufen einer Treppe und/oder Überbodenflächen eines Raumes beinhalten, beispielsweise Fensterbänke, Oberflächen von Möbelstücken oder Ähnliches. Des Weiteren kann ein Zeitsensor des manuell geführten Bodenbearbeitungsgerätes eine Information darüber liefern, innerhalb welcher Zeitspanne der Nutzer eine Bodenbearbeitungstätigkeit bzw. mehrere Bodenbearbeitungstätigkeiten mittels des manuell geführten Bodenbearbeitungsgerätes ausgeführt hat. Somit kann der zeitliche Verlauf und/ oder eine Geschwindigkeit einer Bodenbearbeitung erfasst werden. Des Weiteren können verschiedenen Zeitpunkten entsprechende Sensordaten zugeordnet werden. Dadurch können ein Matching und eine Synchronisierung des zeitlichen Verlaufs der Bodenbearbeitung mit detektierten Sensordaten der Detektionseinrichtung des Bodenbearbeitungsgerätes erfolgen. Dieser zeitliche Verlauf der Bodenbearbeitung kann dann entsprechend durch das automatisch betriebene Bodenbearbeitungsgerät nachvollzogen werden, so dass beispielsweise für bestimmte Bodenbearbeitungstätigkeiten eine bestimmte Zeitspanne verwendet wird und/oder das automatisch betriebene Bodenbearbeitungsgerät genauso schnell innerhalb der Umgebung verfährt, wie der Nutzer dies mit dem manuell geführten Bodenbearbeitungsgerät vorgenommen hat. Ein an dem manuell geführten Bodenbearbeitungsgerät vorgesehener Kontaktsensor kann des Weiteren beispielsweise dazu dienen, dass ein Nutzer durch Betätigung einen bestimmten Zeitpunkt während der Bodenbearbeitung und/oder Ort der Umgebung markiert. Der Kontaktsensor kann beispielsweise durch ein Betätigungselement betätigt werden. Insbesondere kann die Betätigung verschiedene Merkmale wie kurzes Niederdrücken, langes Niederdrücken oder Mehrfachbetätigungen registrieren, die unterschiedliche Ereignisse charakterisieren. Das Betätigungselement kann ein Druckknopf oder Ähnliches sein.

Schließlich betrifft die Erfindung auch ein Verfahren zum Betrieb eines Systems der vorgenannten Art mit einem ersten Bodenbearbeitungsgerät und einem zweiten Bodenbearbeitungsgerät, wobei das erste Bodenbearbeitungsgerät ein ausschließlich manuell von einem Nutzer innerhalb einer Umgebung geführtes Bodenbearbeitungsgerät ist und/oder wobei das zweite Bodenbearbeitungsgerät ein ausschließlich automatisch betriebenes Bodenbearbeitungsgerät ist, und wobei sich das zweite Bodenbearbeitungsgerät anhand einer Umgebungskarte innerhalb einer Umgebung orientiert und lokalisiert, wobei das zweite Bodenbearbeitungsgerät die Umgebungskarte an das erste Bodenbearbeitungsgerät übermittelt, wobei das erste Bodenbearbeitungsgerät sich unter Zuhilfenahme eigener Sensoren in der Umgebungskarte lokalisiert, während einer Fortbewegung einen Fortbewegungspfad des ersten Bodenbearbeitungsgerätes detektiert und mit Bezug zu der Umgebungskarte eine Information über den detektierten Fortbewegungspfad, sowie insbesondere zusätzlich eine Bodenbearbeitungsinformation, an das zweite Bodenbearbeitungsgerät übermittelt, wobei eine Steuer- und Auswerteeinrichtung des zweiten Bodenbearbeitungsgerätes die empfange Information analysiert und auf der Basis des von dem ersten Bodenbearbeitungsgerät detektierten Fortbewegungspfades und/oder eines nicht von dem Fortbewegungspfade überfahrenen Teilbereiches der Umgebung eine No-Go-Area in die Umgebungskarte einträgt, welche das zweite Bodenbearbeitungsgerät nicht befahren darf. Das erfindungsgemäße Verfahren beinhaltet die Übermittlung einer Information über einen Fortbewegungspfad eines ersten Bodenbearbeitungsgerätes an ein zweites Bodenbearbeitungsgerät, welches daraufhin No-Go-Areas definiert, die beispielsweise Teilbereiche der Umgebung beinhalten, die sich außerhalb des Fortbewegungspfades befinden. Diese definierten No-Go-Areas darf das zweite Bodenbearbeitungsgerät während einer Bodenbearbeitungstätigkeit nicht befahren. Die erfindungsgemäßen Merkmale und Vorteile des Verfahrens ergeben sich wie zuvor in Bezug auf das erfindungsgemäße System näher beschrieben. Zur Vermeidung von Wiederholungen wird hier auf die vorstehenden Ausführungen zu dem erfindungsgemäßen System verwiesen.

### Kurze Beschreibung der Zeichnungen

Im Folgenden wird die Erfindung anhand von Ausführungsbeispielen näher erläutert. Es zeigen:
- Fig. 1: eine Umgebung mit einem System aus einem ersten Bodenbearbeitungsgerät und einem zweiten Bodenbearbeitungsgerät,
- Fig. 2: das erste Bodenbearbeitungsgerät in einer vergrößerten Darstellung,
- Fig. 3: das zweite Bodenbearbeitungsgerät in einer vergrößerten Darstellung,
- Fig. 4: einen Fortbewegungspfad des ersten Bodenbearbeitungsgerätes durch einen Teilbereich der in Fig. 1 dargestellten Umgebung,
- Fig. 5: das zweite Bodenbearbeitungsgerät mit einer Umgebungskarte, in welcher No-Go-Areas definiert sind.

### Beschreibung der Ausführungsformen

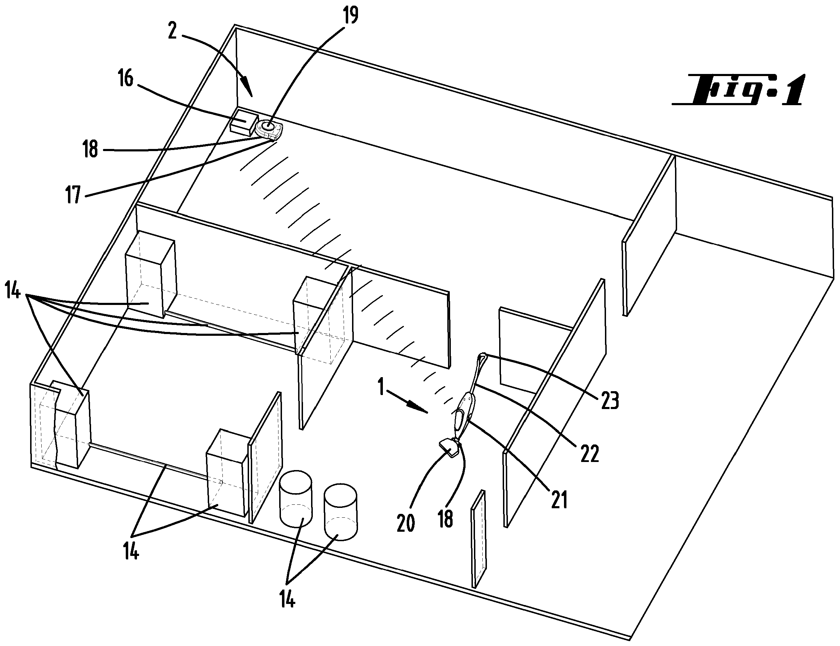

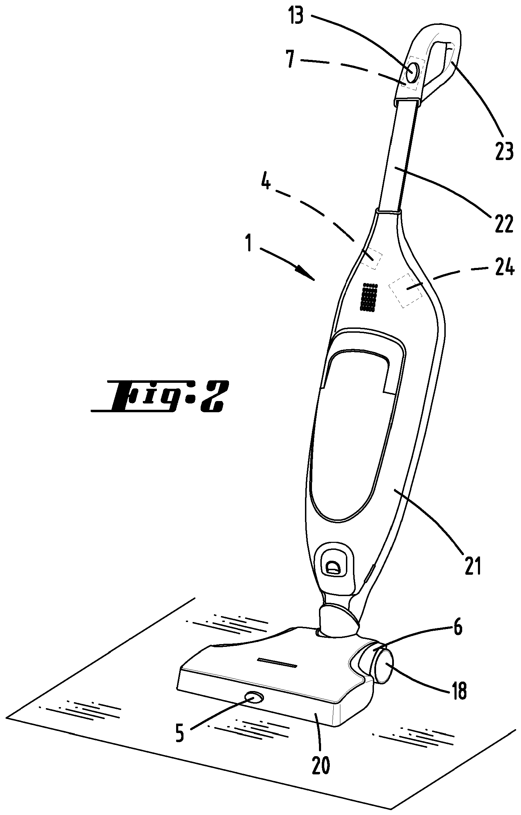

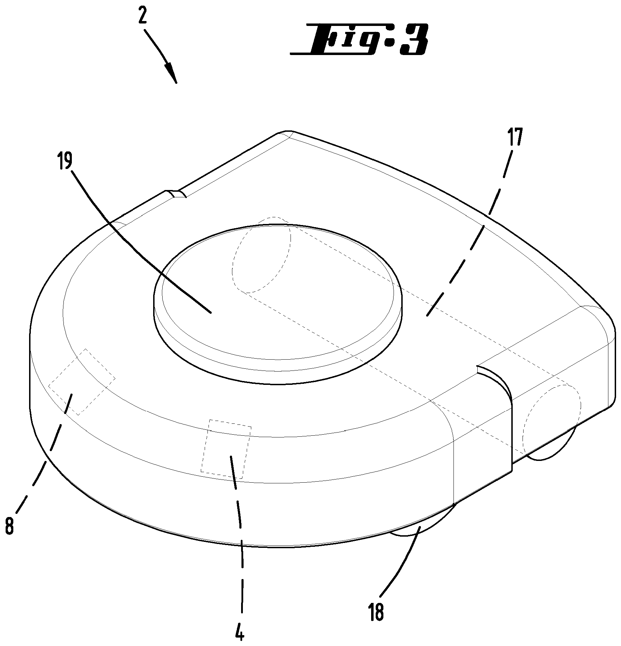

Fig. 1 zeigt schematisch einen Grundriss einer Wohnung mit mehreren Räumen. In der Wohnung befindet sich ein erfindungsgemäßes System aus einem ausschließlich manuell von einem Nutzer geführten ersten Bodenbearbeitungsgerät 1 und einem ausschließlich automatisch betriebenen zweiten Bodenbearbeitungsgerät 2. Das erste Bodenbearbeitungsgerät 1 ist hier beispielsweise ein handgeführter Staubsauger, welcher mit Bezug zu Fig. 2 näher erläutert wird. Das automatisch betriebene Bodenbearbeitungsgerät 2 ist hier beispielsweise ein Saugroboter, welcher mit Bezug zu Fig. 3 näher dargestellt wird. Die Umgebung der Bodenbearbeitungsgeräte 1, 2 beinhaltet übliche Raumbegrenzungen wie Wände und Hindernisse 14, welche sowohl von einem Nutzer verlagerbar sein können, oder auch nicht. Durch einen Nutzer leicht entfernbare Hindernisse 14 sind beispielsweise Blumentöpfe, Vasen, Kleinmöbel oder Ähnliches. Zu den nicht ohne Weiteres leicht zu verschiebenden oder entfernenden Hindernissen 14 zählen beispielsweise schwere Möbelstücke, Klaviere, große Lautsprecher oder Ähnliches. In der Umgebung befindet sich hier eine Basisstation 16 für das automatisch betriebene zweite Bodenbearbeitungsgerät 2. Diese Basisstation 16 weist Einrichtungen und Mittel auf, um Servicetätigkeiten an dem automatisch betriebenen zweiten Bodenbearbeitungsgerät 2 oder ggf. auch weiterer Bodenbearbeitungsgeräte 1, 2 durchzuführen. Zu den Servicetätigkeiten gehören beispielsweise das Aufladen eines Akkumulators eines Bodenbearbeitungsgerätes 1, 2, das Entleeren einer Staubsammelkammer eines Bodenbearbeitungsgerätes 1, 2, das Reinigen eines Bodenbearbeitungselementes 17 eines Bodenbearbeitungsgerätes 1, 2 oder Ähnliches.

Die Bodenbearbeitungsgeräte 1, 2 werden nun detaillierter erläutert. Das manuell von einem Nutzer geführte Bodenbearbeitungsgerät 1 weist gemäß den Figuren 1 und 2 ein Basisgerät 21 sowie eine lösbar mit dem Basisgerät 21 verbundene Bodendüse 20 auf. Bei der Bodendüse 20 handelt es sich hier beispielsweise um eine Saugdüse mit einer nicht näher dargestellten Reinigungsbürste, welche ein Bodenbearbeitungselement 17 bildet. Die Bodendüse 20 weist Räder 18 auf, um das Bodenbearbeitungsgerät 1 insgesamt mit geringem Widerstand über einen zu reinigenden Boden zu bewegen. Dazu können die Räder 18 oder auch das Bodenbearbeitungselement 17 motorisch angetrieben sein, um die Fortbewegung des Bodenbearbeitungsgerätes 1 zu unterstützen und einem Nutzer die Handhabung des Bodenbearbeitungsgerätes 1 zu erleichtern. Das Basisgerät 21 weist einen Stiel 22 mit einem Griff 23 auf. An dem Griff 23 kann ein hier nicht näher dargestellter Schalter vorgesehen sein, über welchen ein Nutzer das Bodenbearbeitungsgerät 1 an- und ausschalten kann sowie ggf. unterschiedliche Leistungsstufen oder Ähnliches einstellen kann. Hier verfügt der Griff 23 des Weiteren über ein Betätigungselement 13, welches mit einer Detektionseinrichtung 7, nämlich einem Kontaktsensor, in Wirkverbindung steht. Das Betätigungselement 13 kann durch einen Nutzer niedergedrückt werden, so dass der Kontaktsensor ein entsprechendes Kontaktsignal registriert. Die Funktion des Betätigungselementes 13 bzw. Kontaktsensors wird später näher erläutert. Das Bodenbearbeitungsgerät 1 weist weitere Detektionseinrichtungen 5, 6 auf, zu welchen eine an der Bodendüse 20 angeordnete Kamera zählt (Bezugsziffer 5). Ebenso ist den Rädern 18 der Bodendüse 20 ein Inertialsensor als weitere Detektionseinrichtung 6 zugeordnet. Die Kamera nimmt Bilder der Umgebung auf, welche einerseits beispielsweise die Hindernisse 14 und andererseits die zu reinigende Bodenfläche beinhalten. Der Inertialsensor detektiert die Radumdrehungen der Räder 18, so dass auf eine durch das Bodenbearbeitungsgerät 1 zurückgelegte Strecke und eine Richtungsänderung des Bodenbearbeitungsgerätes 1 während einer Fortbewegung durch die Umgebung geschlossen werden kann. Das Basisgerät 21 des Bodenbearbeitungsgerätes 1 verfügt des Weitern über eine Recheneinrichtung 24, welche eingerichtet ist, die Signale der Detektionseinrichtungen 5, 6, 7 zumindest teilweise so zu verarbeiten, dass eine Information über die Detektionssignale der Detektionseinrichtungen 5, 6, 7 zusammengestellt und dann mittels eines Kommunikationsmoduls 4 des Bodenbearbeitungsgerätes 1 an das zweite Bodenbearbeitungsgerät 2 des Systems übermittelt werden kann. Das Kommunikationsmodul 4 ist hier beispielsweise ein WLAN-Modul, welches eine drahtlose Kommunikation zwischen den Bodenbearbeitungsgeräten 1, 2 des Systems erlaubt.

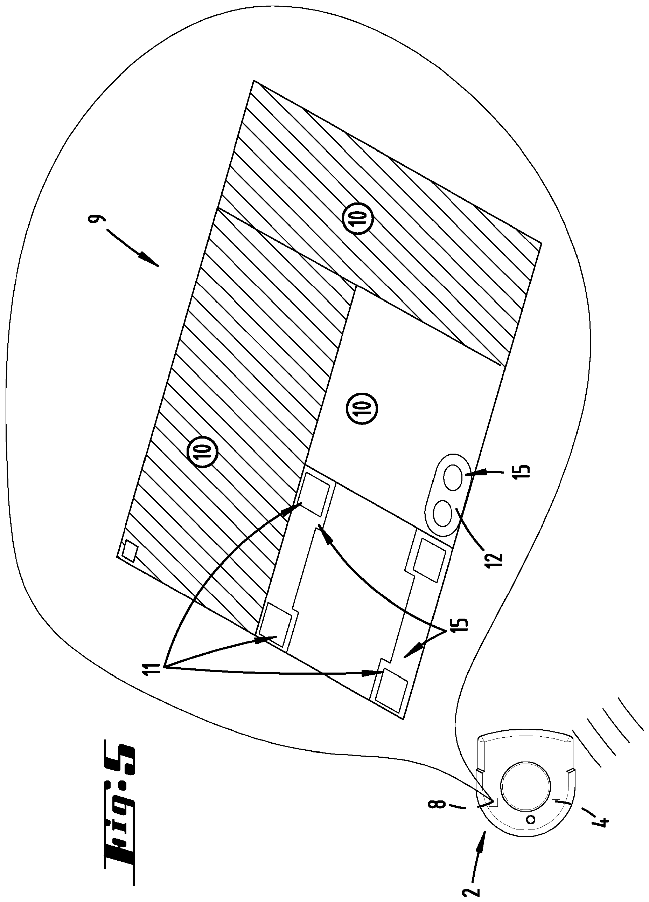

Das in Fig. 3 näher dargestellte automatisch betriebene zweite Bodenbearbeitungsgerät 2 weist motorisch angetriebene Räder 18 sowie ein Bodenbearbeitungselement 17 auf, welches hier beispielsweise als rotierende Borstenwalze ausgebildet ist, deren Längserstreckung im Wesentlichen horizontal zu einem zu reinigenden Boden ausgerichtet ist. Das zweite Bodenbearbeitungsgerät 2 verfügt ebenfalls über ein als WLAN-Modul ausgebildetes Kommunikationsmodul 4, um die Informationen des ersten Bodenbearbeitungsgerätes 1 empfangen zu können. Des Weiteren hat das zweite Bodenbearbeitungsgerät 2 eine Auswerteeinrichtung 8, welche eingerichtet ist, die von dem ersten Bodenbearbeitungsgerät 1 erhaltenen Informationen auszuwerten und für eine Bodenbearbeitung zu nutzen. Damit das zweite Bodenbearbeitungsgerät 2 selbstständig innerhalb der Umgebung verfahren kann, verfügt dieses über eine Navigationseinrichtung mit einem Laserscanner 19, welcher vorzugsweise in einem 360°-Winkelbereich Abstände zu Hindernissen 14 und Begrenzungen der Räume einer Wohnung detektieren kann. Die Auswerteeinrichtung 8 des Bodenbearbeitungsgerätes 2 verarbeitet diese Abstandsdaten zu einer beispielhaft in Fig. 5 dargestellten Umgebungskarte 9, welche einen Grundriss der Umgebung, Orte von Hindernissen 14, die Position der Basisstation 16 und Ähnliches enthält. Die Umgebungskarte 9 dient zur Navigation und Selbstlokalisation des zweiten Bodenbearbeitungsgerätes 2 innerhalb der Umgebung. Zum Erstellen der Umgebungskarte 9 kann das Bodenbearbeitungsgerät 2 beispielsweise einen sog. SLAM-Algorithmus (Simultaneous Localization And Measurement-Algorithmus) verwenden.

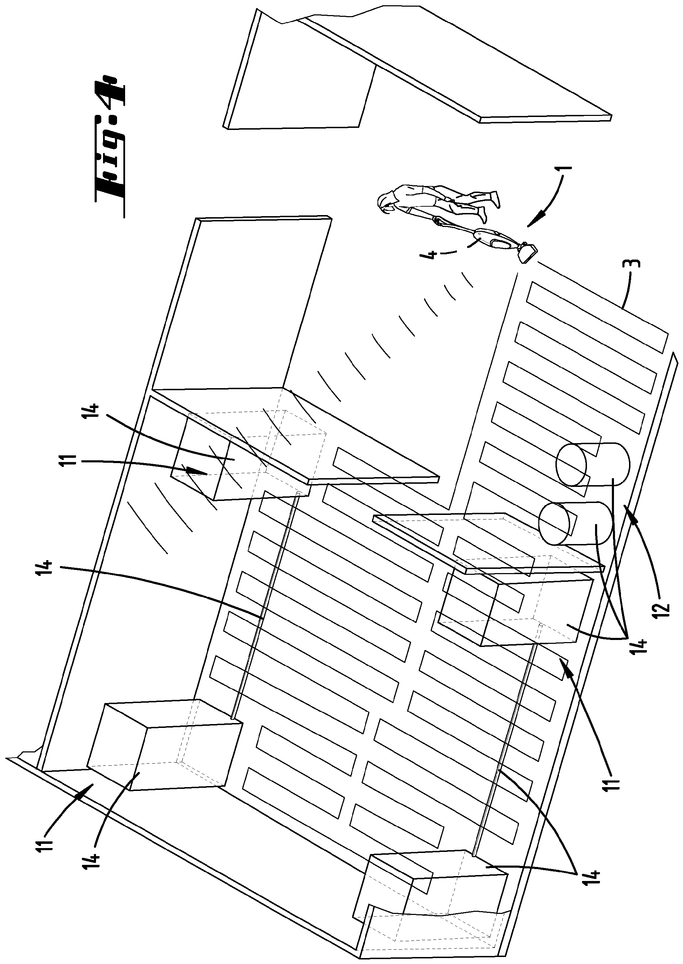

Die Erfindung wird nun mit Bezug zu den Figuren 4 und 5 näher erläutert. Die nachfolgenden Ausführungen sind lediglich beispielhaft für die Verwendung eines erfindungsgemäßen Systems. Dabei versteht es sich, dass die Bodenbearbeitungsgeräte 1, 2 auch anders ausgestaltet sein können, d.h. beispielsweise dass diese nicht ausschließlich Staubsauggeräte sein müssen, sondern beispielsweise auch Wischgeräte, Poliergeräte oder Ähnliches sein können. Darüber hinaus kann das System neben den dargestellten Bodenbearbeitungsgeräten 1, 2 auch noch eine Vielzahl weiterer Bodenbearbeitungsgeräte 1, 2 beinhalten oder andere Geräte, wie beispielsweise Serviceroboter, Überwachungsroboter oder ähnliche, die keine Bodenbearbeitungstätigkeiten ausführen.

Gemäß einer möglichen Ausführung funktioniert die Erfindung so, dass der Nutzer das erste, hier beispielhaft manuell geführte, Bodenbearbeitungsgerät 1 durch die in Fig. 1 und 4 dargestellte Umgebung verschiebt. Dabei verfolgt er wie in Fig. 4 dargestellt den Fortbewegungspfad 3, welcher einen ausreichenden, von dem Nutzer nach Augenmaß bestimmten Abstand zu den Hindernissen 14, hier beispielsweise vier Lautsprecher, die in den Raumecken angeordnet sind, hält. Die zwischen den Lautsprechern verlaufenden Kabel, welche ebenfalls Hindernisse 14 sind, überfährt der Nutzer jedoch mit dem manuell geführten ersten Bodenbearbeitungsgerät 1. Wie erkennbar, spart der Fortbewegungspfad 3 somit die Raumecken aus, kreuzt jedoch die auf dem Boden liegenden Kabel. Nach dem abgeschlossenen Bodenbearbeitungsvorgang übermittelt das erste Bodenbearbeitungsgerät 1 mittels seines Kommunikationsmoduls 4 eine Nachricht an das zweite, hier automatisch betriebene Bodenbearbeitungsgerät 2. Das zweite Bodenbearbeitungsgerät 2 empfängt die Nachricht mittels seines Kommunikationsmoduls 4 und analysiert die darin enthaltenen Informationen, die den Verlauf des Fortbewegungspfades 3 des ersten Bodenbearbeitungsgerätes 1 enthalten. Darüber hinaus können auch noch weitere Informationen enthalten sein, beispielsweise Bodenbearbeitungsinformationen zu einem von dem ersten Bodenbearbeitungsgerät 1 bei der Bodenbearbeitung verwendeten Geräteparameter, Bodenbearbeitungsparameter und/oder ein bestimmtes mit dem ersten Bodenbearbeitungsgerät 1 verbundenes Gerätezubehör. Der Geräteparameter kann beispielsweise einen Typ des ersten Bodenbearbeitungsgerätes 1, einen darin verbauten Motor oder Ähnliches betreffen. Ein mitgeteilter Bodenbearbeitungsparameter kann beispielsweise eine bei der Bodenbearbeitung des ersten Bodenbearbeitungsgerätes 1 eingestellte Gebläseleistung, eine Fortbewegungsgeschwindigkeit oder Ähnliches sein. Das Gerätezubehör kann ein bestimmtes Vorsatzgerät wie beispielsweise eine Bodendüse 20, oder ein bestimmtes Bodenbearbeitungselement 17 oder Ähnliches sein.

Wie in Fig. 5 dargestellt verfügt das zweite, automatisch betriebene Bodenbearbeitungsgerät 2 über eine Umgebungskarte 9, welche zuvor während einer Erkundungsfahrt oder während einer Bodenbearbeitungstätigkeit erstellt wurde. Diese wird nun um No-Go-Areas 15 ergänzt, welche die Steuer- und Auswerteeinrichtung 8 des zweiten Bodenbearbeitungsgerätes 2 als von dem zweiten Bodenbearbeitungsgerät 2 nicht zu befahrende Bereiche festlegt. Zu diesem Zweck analysiert die Steuer- und Auswerteeinrichtung 8 die von dem ersten Bodenbearbeitungsgerät 1 empfangenen Informationen, nämlich insbesondere den von dem ersten Bodenbearbeitungsgerät 1 verfolgten Fortbewegungspfad 3, und erkennt, welche Teilbereiche 11, 12 der Umgebung nicht von dem ersten Bodenbearbeitungsgerät 1 überfahren wurden. Diese Teilbereiche 11, 12 werden von der Steuer- und Auswerteeinrichtung 8 als gesperrte Bereiche markiert, welche das zweite Bodenbearbeitungsgerät 2 bei einem anschließend automatisch gesteuerten Bodenbearbeitungsvorgang nicht befährt. Darüber hinaus erkennt die Steuer- und Auswerteeinrichtung 8 des zweiten Bodenbearbeitungsgerätes 2, dass die Umgebung auch Hindernisse 14, nämlich hier die Kabel zwischen den Lautsprechern, beinhaltet, die der Nutzer mit dem ersten Bodenbearbeitungsgerät 1 überfahren hat. Die Nachricht des ersten Bodenbearbeitungsgerätes 1 an das zweite Bodenbearbeitungsgerät 2 kann entsprechend eine zusätzliche Information darüber enthalten, dass Hindernisse 14 überfahren wurden. Hierzu kann beispielsweise die Detektionseinrichtung 6 des ersten Bodenbearbeitungsgerätes 1 eine Information über ein Abheben des ersten Bodenbearbeitungsgerätes 1 von der Bodenfläche liefern. Die Steuer- und Auswerteeinrichtung 8 des zweiten Bodenbearbeitungsgerätes 2 erkennt anhand dieser Höheninformation, dass die Kabel ein für das zweite Bodenbearbeitungsgerät 2 nicht überwindbares Hindernis 14 darstellen und markiert die entsprechenden Teilbereiche 11 ebenfalls als No-Go-Areas 15 für das zweite Bodenbearbeitungsgerät 2, obwohl das zweite Bodenbearbeitungsgerät 2 diese gegebenenfalls sogar überwinden oder wegschieben könnte, jedoch ein gewisses Risiko besteht, dass sich das zweite Bodenbearbeitungsgerät 2 an diesen Hindernissen 14 festfährt.

Gemäß einer besonderen Ausführungsform analysiert die Steuer- und Auswerteeinrichtung 8 Informationen zu mehreren vorausgegangenen Bodenbearbeitungstätigkeiten des ersten Bodenbearbeitungsgerätes 1 in einem definierten Teil der Umgebung, um festzustellen, welche Teilbereiche 11, 12 der Umgebung relativ selten von dem ersten Bodenbearbeitungsgerät 1 bearbeitet wurden. Für die genaue Definition einer seltenen Bodenbearbeitung vergleicht die Steuer- und Auswerteeinrichtung 8 die Häufigkeit des Überfahrens des Teilbereiches 11, 12 durch das erste Bodenbearbeitungsgerät 1 mit für diese Teilbereiche 11, 12 definierten Häufigkeitsschwellwerten. Sofern festgestellt wird, dass das erste Bodenbearbeitungsgerät 1 in diesem Sinne selten in diesen Teilbereich 11, 12 hineinfährt, schließt die Steuer- und Auswerteeinrichtung 8 des zweiten Bodenbearbeitungsgerätes 2 darauf, dass der Nutzer des manuell geführten ersten Bodenbearbeitungsgerätes 1 Gründe dafür hat, diesen Teilbereich 11, 12 nicht so häufig zu bearbeiten, beispielsweise weil ein Abstand zwischen dort vorhandenen Hindernissen zu schmal ist, um das erste Bodenbearbeitungsgerät 1 hindurchzuführen, oder weil ein Hindernis 14 überfahren werden muss, weil empfindliche Gegenstände in diesem Teilbereich 11, 12 angeordnet sind oder Ähnliches. Die Steuer- und Auswerteeinrichtung 8 definiert diesen Teilbereich 11, 12 dann ihrerseits in der Umgebungskarte 9 als No-Go-Area 15.

Des Weiteren kann die Steuer- und Auswerteeinrichtung 8 Informationen des ersten Bodenbearbeitungsgerätes 1 zu mehreren zeitlich vorausgegangenen Bodenbearbeitungstätigkeiten auch dahingehend analysieren, ob das erste Bodenbearbeitungsgerät 1 in einem bestimmten Teilbereich 11, 12 häufig ein Hindernis 14 verschoben und/oder überwunden hat. Sofern diese Situation in der Vergangenheit häufiger auftrat und die Häufigkeit einen definierten Häufigkeitsschwellwert überschreitet, definiert die Steuer- und Auswerteeinrichtung 8 diesen Teilbereich 11, 12 ebenfalls als No-Go-Area 15.

Des Weiteren kann die Steuer- und Auswerteeinrichtung 8 auch Signale auswerten, die ein Nutzer des ersten Bodenbearbeitungsgerätes 1 manuell mittels Niederdrücken des an dem ersten Bodenbearbeitungsgerät 2 angeordneten Betätigungselements 13 gegeben hat. Die als Kontaktsensor ausgebildete Detektionseinrichtung 7 detektiert das Niederdrücken des Betätigungselementes 13 und übermittelt die räumlichen Positionen des Fortbewegungspfades 3, an welchen der Nutzer das Betätigungselement 13 gedrückt hat, mitsamt der Information über den Fortbewegungspfad 3 an das zweite Bodenbearbeitungsgerät 2. Die Steuer- und Auswerteeinrichtung 8 des zweiten Bodenbearbeitungsgerätes 2 kann daraufhin einen Teilbereich 11, 12 der Umgebung identifizieren, in welchem der Nutzer bei der Fortbewegung des ersten Bodenbearbeitungsgerätes 1 eine Position des Fortbewegungspfades 3 markiert hat. Derjenige Teilbereich 11, 12, in welchem die markierte Position liegt, wird dann als No-Go-Area 15 definiert, wobei der Nutzer vorzugsweise festlegen kann, wie groß die No-Go-Area 15 um die markierte Position des Fortbewegungspfades 3 herum sein soll. Die markierte Position kann beispielsweise eine Position sein, in welcher ein Kabel auf dem zu bearbeitenden Boden liegt, welches zwar von dem ersten Bodenbearbeitungsgerät 1 überwunden werden kann, jedoch nicht von dem zweiten Bodenbearbeitungsgerät 2 angefahren werden soll.

In allen vorgenannten Beispielen kann des Weiteren vorgesehen sein, dass der Nutzer vor der automatischen Definition eines Teilbereiches 11, 12 als No-Go-Area 15 eine Bestätigung durchzuführen hat. Zu diesem Zweck kann die Steuer- und Auswerteeinrichtung 8 des zweiten Bodenbearbeitungsgerätes 2 zunächst eine Mitteilung an den Nutzer senden, dass eine No-Go-Area 15 in einem bestimmten Teilbereich 11, 12 definiert werden soll, woraufhin der Nutzer dies dann zu bestätigen, zu verneinen oder beispielsweise die Position der No-Go-Area 15 abzuändern hat. Die Bestätigung kann beispielsweise über das zweite Bodenbearbeitungsgerät 2 angefordert werden, beispielsweise auf einem Display des Bodenbearbeitungsgerätes 2. Alternativ und besonders vorzugsweise erhält der Nutzer jedoch beispielsweise auf ein externes Endgerät wie ein Mobiltelefon, ein Tablet-Computer oder Ähnliches eine entsprechende Aufforderung über eine auf dem externen Endgerät installierte Applikation.

Nach Eintragen der No-Go-Areas 15 in die Umgebungskarte 9 bewegt sich das zweite Bodenbearbeitungsgerät 2 bei einer Bodenbearbeitung der Umgebung unter Beachtung der in der Umgebungskarte 9 markierten No-Go-Areas 15 fort. Dabei kann er nach einer beliebigen Verfahrstrategie einen Fortbewegungspfad 3 in der Umgebung planen, solange dieser Fortbewegungspfad 3 nicht durch eine No-Go-Area 15 fährt oder diese zumindest berührt. Es ist dabei nicht erforderlich, dass das zweite Bodenbearbeitungsgerät 2 identisch entlang des Fortbewegungspfades 3 verfährt, welchen der Nutzer auch mittels des ersten Bodenbearbeitungsgerätes 1 verfolgt hat, wenngleich dies selbstverständlich in manchen Fällen auch möglich sein kann. Es empfiehlt sich, dass die Steuer- und Auswerteeinrichtung 8 des zweiten Bodenbearbeitungsgerätes 2 einen Fortbewegungspfad 3 verfolgt, welcher besonders zeit- und/oder energiesparend ist.

### Liste der Bezugszeichen

- 1: erstes Bodenbearbeitungsgerät
- 2: zweites Bodenbearbeitungsgerät
- 3: Fortbewegungspfad
- 4: Kommunikationsmodul
- 5: Detektionseinrichtung
- 6: Detektionseinrichtung
- 7: Detektionseinrichtung
- 8: Steuer- und Auswerteeinrichtung
- 9: Umgebungskarte
- 10: Bearbeitungsstatus
- 11: Teilbereich
- 12: Teilbereich
- 13: Betätigungselement
- 14: Hindernis
- 15: No-Go-Area
- 16: Basisstation
- 17: Bodenbearbeitungselement
- 18: Rad
- 19: Laserscanner
- 20: Bodendüse
- 21: Basisgerät
- 22: Stiel
- 23: Griff
- 24: Recheneinrichtung

## Patentansprüche

1. System mit einem ersten Bodenbearbeitungsgerät (1) und einem zweiten Bodenbearbeitungsgerät (2), wobei das erste Bodenbearbeitungsgerät (1) ein ausschließlich manuell von einem Nutzer innerhalb einer Umgebung geführtes Bodenbearbeitungsgerät (1) ist und/oder wobei das zweite Bodenbearbeitungsgerät (2) ein ausschließlich automatisch betriebenes Bodenbearbeitungsgerät (2) ist, und wobei das zweite Bodenbearbeitungsgerät (2) ausgebildet ist, sich anhand einer Umgebungskarte (9) innerhalb einer Umgebung zu orientieren und zu lokalisieren, **dadurch gekennzeichnet, dass** das zweite Bodenbearbeitungsgerät (2) ausgebildet ist, die Umgebungskarte (9) an das erste Bodenbearbeitungsgerät (1) zu übermitteln, wobei das erste Bodenbearbeitungsgerät (1) eingerichtet ist, sich unter Zuhilfenahme eigener Sensoren in der Umgebungskarte (9) zu lokalisieren, während einer Fortbewegung einen Fortbewegungspfad (3) des ersten Bodenbearbeitungsgerätes (1) zu detektieren und mit Bezug zu der Umgebungskarte (9) eine Information über den detektierten Fortbewegungspfad (3) an das zweite Bodenbearbeitungsgerät (2) zu übermitteln, wobei das zweite Bodenbearbeitungsgerät (2) eine Steuer- und Auswerteeinrichtung (8) aufweist, die eingerichtet ist, die empfangene Information zu analysieren und auf der Basis des von dem ersten Bodenbearbeitungsgerät (1) detektierten Fortbewegungspfades (3) und/ oder eines nicht von dem Fortbewegungspfad (3) überfahrenen Teilbereiches (11, 12) der Umgebung eine No-Go-Area (15) in die Umgebungskarte (9) einzutragen, welche das zweite Bodenbearbeitungsgerät (2) nicht befahren darf.

2. System nach Anspruch 1, **dadurch gekennzeichnet, dass** die Steuer- und Auswerteeinrichtung (8) des zweiten Bodenbearbeitungsgerätes (2) eingerichtet ist, eine Fortbewegung des zweiten Bodenbearbeitungsgerätes (2) unter Meidung der No-Go-Area (15) zu steuern.

3. System nach einem der vorhergehenden Ansprüche, **dadurch gekennzeichnet, dass** die Steuer- und Auswerteeinrichtung (8) des zweiten Bodenbearbeitungsgerätes (2) eingerichtet ist, das zweite Bodenbearbeitungsgerät (2) abweichend von dem Fortbewegungspfad (3) des ersten Bodenbearbeitungsgerätes (1) zu steuern.

4. System nach einem der vorhergehenden Ansprüche, **dadurch gekennzeichnet, dass** die Steuer- und Auswerteeinrichtung (8) des zweiten Bodenbearbeitungsgerätes (2) eingerichtet ist, die Fortbewegungspfade (3) mehrerer zeitlich vorausgehender Fortbewegungen des ersten Bodenbearbeitungsgerätes (1) dahingehend zu analysieren, dass ein Teilbereich (11, 12) der Umgebung identifiziert wird, welcher selten von dem ersten Bodenbearbeitungsgerät (1) überfahren wird, wobei die Häufigkeit des Überfahrens des Teilbereiches (11, 12) mit einem definierten Häufigkeitsschwellwert verglichen wird, und wobei der Teilbereich (11, 12) bei Unterschreiten des Häufigkeitsschwellwertes als No-Go-Area (15) definiert wird.

5. System nach einem der vorhergehenden Ansprüche, **dadurch gekennzeichnet, dass** das erste Bodenbearbeitungsgerät (1) des Weiteren eingerichtet ist, eine Bodenbearbeitungsinformation an das zweite Bodenbearbeitungsgerät (2) zu übermitteln, wobei die Steuer- und Auswerteeinrichtung (8) des zweiten Bodenbearbeitungsgerätes (2) eingerichtet ist, die Bodenbearbeitungsinformation und den zugehörigen Fortbewegungspfad (3) mindestens einer zeitlich vorausgehenden Bodenbearbeitung des ersten Bodenbearbeitungsgerätes (1) dahingehend zu analysieren, dass ein Teilbereich (11, 12) der Umgebung identifiziert wird, welcher mit einem Geräteparameter, einem Bodenbearbeitungsparameter und/oder einem Gerätezubehör bearbeitet wurde, die von definierten Standardparametern für das erste und/oder zweite Bodenbearbeitungsgerät (1) abweichen, und wobei der Teilbereich (11, 12) bei Abweichen von den Standardparametern als No-Go-Area (15) definiert wird.

6. System nach einem der vorhergehenden Ansprüche, **dadurch gekennzeichnet, dass** die Steuer- und Auswerteeinrichtung (8) des zweiten Bodenbearbeitungsgerätes (2) eingerichtet ist, die Fortbewegungspfade (3), sowie insbesondere zusätzlich eine Bodenbearbeitungsinformation, mehrerer zeitlich vorausgehender Fortbewegungen des ersten Bodenbearbeitungsgerätes (1) dahingehend zu analysieren, dass ein Teilbereich (11, 12) der Umgebung identifiziert wird, welcher ein von dem ersten Bodenbearbeitungsgerät (1) verschobenes und/oder überwundenes Hindernis (14) aufweist, wobei eine Häufigkeit der Detektion eines solchen Hindernisses (14) in dem bestimmten Teilbereich mit einem definierten Häufigkeitsschwellwert verglichen wird, und wobei der Teilbereich (11, 12) bei Überschreiten des Häufigkeitsschwellwertes als No-Go-Area (15) definiert wird.

7. System nach einem der vorhergehenden Ansprüche, **dadurch gekennzeichnet, dass** das erste Bodenbearbeitungsgerät (1) ein von einem Nutzer betätigbares Betätigungselement (13) aufweist, mit welchem der Nutzer während einer Fortbewegung des ersten Bodenbearbeitungsgerätes (1) Positionen des Fortbewegungspfades (3) markieren kann, wobei die Steuer- und Auswerteeinrichtung (8) des zweiten Bodenbearbeitungsgerätes (2) eingerichtet ist, den Fortbewegungspfad (3) mindestens einer zeitlich vorausgehenden Fortbewegung des ersten Bodenbearbeitungsgerätes (1) dahingehend zu analysieren, dass ein Teilbereich (11, 12) der Umgebung identifiziert wird, in Bezug auf welchen ein Nutzer des ersten Bodenbearbeitungsgerätes (1) zuvor eine Markierung vorgenommen hat, wobei der markierte Teilbereich (11, 12) als No-Go-Area (15) definiert wird.

8. System nach einem der vorhergehenden Ansprüche, **dadurch gekennzeichnet, dass** die Steuer- und Auswerteeinrichtung (8) des zweiten Bodenbearbeitungsgerätes (2) eingerichtet ist, vor Definition eines Teilbereiches (11, 12) der Umgebung als No-Go-Area (15) eine Bestätigung durch den Nutzer des zweiten Bodenbearbeitungsgerätes (2) anzufordern.

9. System nach einem der vorhergehenden Ansprüche, **dadurch gekennzeichnet, dass** das erste Bodenbearbeitungsgerät (1) zumindest eine Detektionseinrichtung (5, 6, 7) aus der folgenden Gruppe aufweist: Kamera, Laserscanner, Bodensensor zur Detektion einer Art einer zu bearbeitenden Fläche, Schmutzsensor zur Detektion einer Art oder eines Grades einer Verschmutzung der zu bearbeitenden Fläche, Sensor zum Ermitteln einer Leistung eines Antriebsmotors, Abstandssensor, Inertialsensor, Zeitsensor, Kontaktsensor.

10. Verfahren zum Betrieb eines durch einen der vorhergehenden Ansprüche gekennzeichneten Systems mit einem ersten Bodenbearbeitungsgerät (1) und einem zweiten Bodenbearbeitungsgerät (2), wobei das erste Bodenbearbeitungsgerät (1) ein ausschließlich manuell von einem Nutzer innerhalb einer Umgebung geführtes Bodenbearbeitungsgerät (1) ist und/oder wobei das zweite Bodenbearbeitungsgerät (2) ein ausschließlich automatisch betriebenes Bodenbearbeitungsgerät (2) ist, wobei sich das zweite Bodenbearbeitungsgerät (2) anhand einer Umgebungskarte (9) innerhalb einer Umgebung orientiert und lokalisiert, wobei das zweite Bodenbearbeitungsgerät (2) die Umgebungskarte (9) an das erste Bodenbearbeitungsgerät (1) übermittelt, wobei das erste Bodenbearbeitungsgerät (1) sich unter Zuhilfenahme eigener Sensoren in der Umgebungskarte (9) lokalisiert, während einer Fortbewegung einen Fortbewegungspfad (3) des ersten Bodenbearbeitungsgerätes (1) detektiert und mit Bezug zu der Umgebungskarte (9) eine Information über den detektierten Fortbewegungspfad (3), sowie insbesondere zusätzlich eine Bodenbearbeitungsinformation, an das zweite Bodenbearbeitungsgerät (2) übermittelt, wobei eine Steuer- und Auswerteeinrichtung (8) des zweiten Bodenbearbeitungsgerätes (2) die empfangene Information analysiert und auf der Basis des von dem ersten Bodenbearbeitungsgerät (1) detektierten Fortbewegungspfades (3) und/oder eines nicht von dem Fortbewegungspfad (3) überfahrenen Teilbereiches (11,12) der Umgebung, sowie ggf. zusätzlich der Bodenbearbeitungsinformation eine No-Go-Area (15) in die Umgebungskarte (9) einträgt, welche das zweite Bodenbearbeitungsgerät (2) nicht befahren darf.

## Claims

1. System comprising a first floor treatment device (1) and a second floor treatment device (2), the first floor treatment device (1) being a floor treatment device (1) which is guided exclusively manually by a user within an environment, and/or the second floor treatment device (2) being an exclusively automatically operated floor treatment device (2), and the second floor treatment device (2) being designed to orientate and localise itself within an environment on the basis of an environment map (9), **characterised in that** the second floor treatment device (2) is designed to transmit the environment map (9) to the first floor treatment device (1), the first floor treatment device (1) being designed to localise itself in the environment map (9) by means of its own sensors, detect a movement path (3) of the first floor treatment device (1) during movement, and transmit information about the detected movement path (3) to the second floor treatment device (2) with reference to the environment map (9), the second floor treatment device (2) having a control and evaluation apparatus (8) which is designed to analyse the received information and, based on the movement path (3) detected by the first floor processing device (1) and/or a portion (11, 12) of the environment not traversed by the movement path (3), enter a no-go area (15) into the environment map (9) that the second floor treatment device (2) is not allowed to travel on.

2. System according to claim 1, **characterised in that** the control and evaluation apparatus (8) of the second floor treatment device (2) is designed to control the movement of the second floor treatment device (2) while avoiding the no-go area (15).

3. System according to either of the preceding claims, **characterised in that** the control and evaluation apparatus (8) of the second floor treatment device (2) is designed to control the second floor treatment device (2) in a manner deviating from the movement path (3) of the first floor treatment device (1).

4. System according to any of the preceding claims, **characterised in that** the control and evaluation apparatus (8) of the second floor treatment device (2) is designed to analyse the movement paths (3) of a plurality of temporally preceding movements of the first floor treatment device (1) to the effect that a portion (11, 12) of the environment that is rarely traversed by the first floor treatment device (1) is identified, the frequency of the traversal of the portion (11, 12) being compared with a defined frequency threshold, and the portion (11, 12) being defined as a no-go area (15) if the frequency threshold is not met.

5. System according to any of the preceding claims, **characterised in that** the first floor treatment device (1) is further designed to transmit floor treatment information to the second floor treatment device (2), the control and evaluation apparatus (8) of the second floor treatment device (2) being designed to analyse the floor treatment information and the associated movement path (3) of at least one temporally preceding floor treatment of the first floor treatment device (1) to the effect that a portion (11, 12) of the environment is identified that was treated using a device parameter, a floor treatment parameter and/or a device accessory which deviate from defined standard parameters for the first and/or second floor treatment device (1), and the portion (11, 12) being defined as a no-go area (15) in the case of a deviation from the standard parameters.

6. System according to any of the preceding claims, **characterised in that** the control and evaluation apparatus (8) of the second floor treatment device (2) is designed to analyse the movement paths (3), and, in addition, in particular floor treatment information, of a plurality of temporally preceding movements of the first floor treatment device (1) to the effect that a portion (11, 12) of the environment that has an obstacle (14) which was displaced and/or overcome by the first floor treatment device (1) is identified, a frequency of detection of such an obstacle (14) in the determined portion being compared with a defined frequency threshold, and the portion (11, 12) being defined as a no-go area (15) if the frequency threshold is exceeded.

7. System according to any of the preceding claims, **characterised in that** the first floor treatment device (1) has an actuating element (13) which can be actuated by a user and by means of which the user can mark positions of the movement path (3) during a movement of the first floor treatment device (1), the control and evaluation apparatus (8) of the second floor treatment device (2) being designed to analyse the movement path (3) of at least one temporally preceding movement of the first floor treatment device (1) to the effect that a portion (11, 12) of the environment is identified, in relation to which a user of the first floor treatment device (1) has previously made a marking, the marked portion (11, 12) being defined as a no-go area (15).

8. System according to any of the preceding claims, **characterised in that** the control and evaluation apparatus (8) of the second floor treatment device (2) is designed to request a confirmation from the user of the second floor treatment device (2) before the definition of a portion (11, 12) of the environment as a no-go area (15).

9. System according to any of the preceding claims, **characterised in that** the first floor treatment device (1) has at least one detection apparatus (5, 6, 7) from the following group: camera, laser scanner, floor sensor for detecting a type of surface to be treated, dirt sensor for detecting a type or degree of contamination of the surface to be treated, sensor for determining the power of a drive motor, distance sensor, inertial sensor, time sensor, and contact sensor.

10. Method for operating a system **characterised by** any of the preceding claims, comprising a first floor treatment device (1) and a second floor treatment device (2), wherein the first floor treatment device (1) is a floor treatment device (1) which is guided exclusively manually by a user within an environment and/or wherein the second floor treatment device (2) is an exclusively automatically operated floor treatment device (2), wherein the second floor treatment device (2) orientates and localises itself within an environment on the basis of a environment map (9), wherein the second floor treatment device (2) transmits the environment map (9) to the first floor treatment device (1), wherein the first floor treatment device (1) localises itself in the environment map (9) by means of its own sensors, detects a movement path (3) of the first floor treatment device (1) during movement, and transmits information about the detected movement path (3), and, in addition, in particular floor treatment information, to the second floor treatment device (2) with reference to the environment map (9), wherein a control and evaluation apparatus (8) of the second floor treatment device (2) analyses the received information and, based on the movement path (3) detected by the first floor treatment device (1) and/or a portion (11, 12) of the environment not traversed by the movement path (3) and, if necessary, additionally the floor treatment information, enters a no-go area (15) into the environment map (9) that the second floor treatment device (2) is not allowed to travel on.

## Revendications

1. Système avec un premier appareil de traitement du sol (1) et un deuxième appareil de traitement du sol (2), dans lequel le premier appareil de traitement du sol (1) est un appareil de traitement du sol (1) guidé exclusivement manuellement par un utilisateur dans un environnement et/ou dans lequel le deuxième appareil de traitement du sol (2) est un appareil de traitement du sol (2) fonctionnant exclusivement de manière automatique, et dans lequel le deuxième appareil de traitement du sol (2) est conçu pour s'orienter et se localiser dans un environnement sur la base d'une carte d'environnement (9), **caractérisé en ce que** le deuxième appareil de traitement du sol (2) est conçu pour transmettre la carte d'environnement (9) au premier appareil de traitement du sol (1), dans lequel le premier appareil de traitement du sol (1) est configuré pour se localiser dans la carte d'environnement (9) à l'aide de ses propres capteurs, pour détecter un trajet de déplacement (3) du premier appareil de traitement du sol (1) pendant un déplacement et pour transmettre au deuxième appareil de traitement du sol (2) une information sur le trajet de déplacement détecté (3) par référence à la carte d'environnement (9), dans lequel le deuxième appareil de traitement du sol (2) présente un dispositif de commande et d'évaluation (8) qui est configuré pour analyser l'information reçue et pour, sur la base du trajet de déplacement (3) détecté par le premier appareil de traitement du sol (1) et/ou d'une zone partielle (11, 12) de l'environnement qui n'est pas traversée par le trajet de déplacement (3), entrer une zone interdite (15) dans la carte d'environnement (9) que le deuxième appareil de traitement du sol (2) n'est pas autorisé à parcourir.

2. Système selon la revendication 1, **caractérisé en ce que** le dispositif de commande et d'évaluation (8) du deuxième appareil de traitement du sol (2) est configuré pour commander un déplacement du deuxième appareil de traitement du sol (2) en évitant la zone interdite (15).

3. Système selon l'une des revendications précédentes, **caractérisé en ce que** le dispositif de commande et d'évaluation (8) du deuxième appareil de traitement du sol (2) est configuré pour commander le deuxième appareil de traitement du sol (2) de manière à s'écarter du trajet de déplacement (3) du premier appareil de traitement du sol (1).

4. Système selon l'une des revendications précédentes, **caractérisé en ce que** le dispositif de commande et d'évaluation (8) du deuxième appareil de traitement du sol (2) est configuré pour analyser les trajets de déplacement (3) de plusieurs déplacements du premier appareil de traitement du sol (1) qui précèdent dans le temps de manière à identifier une zone partielle (11, 12) de l'environnement qui est rarement traversée par le premier appareil de traitement du sol (1), dans lequel la fréquence de traversée de la zone partielle (11, 12) est comparée à une valeur seuil de fréquence définie et la zone partielle (11, 12) est définie comme une zone interdite (15) si la valeur seuil de fréquence n'est pas atteinte.

5. Système selon l'une des revendications précédentes, **caractérisé en ce que** le premier appareil de traitement du sol (1) est en outre configuré pour transmettre une information de traitement du sol au deuxième appareil de traitement du sol (2), dans lequel le dispositif de commande et d'évaluation (8) du deuxième appareil de traitement du sol (2) est configuré pour analyser l'information de traitement du sol et le trajet de déplacement associé (3) d'au moins un traitement du sol précédant dans le temps du premier appareil de traitement du sol (1) de manière à identifier une zone partielle (11, 12) de l'environnement qui a été traitée avec un paramètre d'appareil, un paramètre de traitement du sol et/ou un accessoire d'appareil qui diffère des paramètres standard définis pour le premier et/ou le deuxième appareil de traitement du sol (1), et dans lequel la zone partielle (11, 12) est définie comme une zone interdite (15) en cas de différence par rapport aux paramètres standard.

6. Système selon l'une des revendications précédentes, **caractérisé en ce que** le dispositif de commande et d'évaluation (8) du deuxième appareil de traitement du sol (2) est configuré pour analyser les trajets de déplacement (3) et, en particulier, en plus une information de traitement du sol de plusieurs déplacements du premier appareil de traitement du sol (1) précédant dans le temps de manière à identifier une zone partielle (11, 12) de l'environnement qui présente un obstacle (14) déplacé et/ou franchi par le premier appareil de traitement du sol (1), dans lequel une fréquence de détection d'un tel obstacle (14) dans la zone partielle déterminée est comparée à une valeur seuil de fréquence définie et dans lequel la zone partielle (11, 12) est définie comme une zone interdite (15) si la valeur seuil de fréquence est dépassée.

7. Système selon l'une des revendications précédentes, **caractérisé en ce que** le premier appareil de traitement du sol (1) présente un élément d'actionnement (13) pouvant être actionné par un utilisateur, avec lequel l'utilisateur peut marquer des positions du trajet de déplacement (3) pendant un déplacement du premier appareil de traitement du sol (1), dans lequel le dispositif de commande et d'évaluation (8) du deuxième appareil de traitement du sol (2) est configuré pour analyser le trajet de déplacement (3) d'au moins un déplacement précédent dans le temps du premier appareil de traitement du sol (1) de manière à identifier une zone partielle (11, 12) de l'environnement par rapport à laquelle un utilisateur du premier appareil de traitement du sol (1) a préalablement effectué un marquage, dans lequel la zone partielle marquée (11, 12) est définie comme une zone interdite (15).

8. Système selon l'une des revendications précédentes, **caractérisé en ce que** le dispositif de commande et d'évaluation (8) du deuxième appareil de traitement du sol (2) est configuré pour demander une confirmation par l'utilisateur du deuxième appareil de traitement du sol (2) avant de définir une zone partielle (11, 12) de l'environnement comme une zone interdite (15).

9. Système selon l'une des revendications précédentes, **caractérisé en ce que** le premier dispositif de traitement du sol (1) comprend au moins un dispositif de détection (5, 6, 7) du groupe suivant : caméra, scanner laser, capteur de sol pour détecter un type de surface à traiter, capteur de saleté pour détecter un type ou un degré de saleté sur la surface à traiter, capteur pour déterminer une puissance d'un moteur d'entraînement, capteur de distance, capteur inertiel, capteur de temps, capteur de contact.

10. Procédé de fonctionnement d'un système **caractérisé par** l'une des revendications précédentes avec un premier appareil de traitement du sol (1) et un deuxième appareil de traitement du sol (2), dans lequel le premier appareil de traitement du sol (1) est un appareil de traitement du sol (1) guidé exclusivement manuellement par un utilisateur dans un environnement et/ou dans lequel le deuxième appareil de traitement du sol (2) est un appareil de traitement du sol (2) fonctionnant exclusivement de manière automatique, dans lequel le deuxième appareil de traitement du sol (2) s'oriente et se localise dans un environnement sur la base d'une carte d'environnement (9), dans lequel le deuxième appareil de traitement du sol (2) transmet la carte d'environnement (9) au premier appareil de traitement du sol (1), dans lequel le premier appareil de traitement du sol (1) se localise dans la carte d'environnement (9) à l'aide de ses propres capteurs, détecte un trajet de déplacement (3) du premier appareil de traitement du sol (1) pendant un déplacement et transmet au deuxième appareil de traitement du sol (2), en référence à la carte de l'environnement (9), une information sur le trajet de déplacement détecté (3) et, en particulier, en plus une information sur le traitement du sol, dans lequel un dispositif de commande et d'évaluation (8) du deuxième appareil de traitement du sol (2) analyse l'information reçue et, sur la base du trajet de déplacement (3) détecté par le premier appareil de traitement du sol (1) et/ou d'une zone partielle (11, 12) de l'environnement non traversée par le trajet de déplacement (3), ainsi que, le cas échéant, en plus de l'information sur le traitement du sol, entre dans la carte de l'environnement (9) une zone interdite (15) que le deuxième appareil de traitement du sol (2) n'est pas autorisé à parcourir.
